# EUROPÄISCHE PATENTANMELDUNG

(11) **EP 1 213 314 A1**
(43) Veröffentlichungstag der Anmeldung: **12.06.2002**
(21) Anmeldenummer: 00811155.1
(22) Anmeldetag: 07.12.2000
(51) Int. Cl.: C08G 59/42, C08G 59/18

(54) **Härterkomponente zum Härten von Epoxyharzen**

(71) Anmelder: ABB RESEARCH LTD., 8050 Zürich (CH)
(72) Erfinder: Rocks, Jens, 5408 Ennetbaden (CH); Förster, Stefan, 8152 Opfikon (CH); Neugebauer, Sören, 49356 Diepholz (DE)
(74) Vertreter: ABB Patent Attorneys

(57) **Zusammenfassung**

Verfahren zur Herstellung einer bei Raumtemperatur flüssigen und homogenen Härterkomponente, welche Härterkomponente aus einem Gemisch von mindestens zwei cyclischen Carbonsäureanhydriden besteht, wobei mindestens eines der cyclischen Carbonsäureanhydride unter Normalbedingungen ein Feststoff ist und das Mischungsverhältnis der mindestens zwei cyclischen Carbonsäureanhydride derart gewählt ist, dass der Schmelzpunkt des Gemisches unterhalb Raumtemperatur liegt, in welchem Verfahren die mindestens zwei cyclischen Carbonsäureanhydride bei Raumtemperatur vermengt werden und das Vermengte bei Raumtemperatur belassen wird.

## Beschreibung

### TECHNISCHES GEBIET

Die vorliegende Erfindung betrifft ein Verfahren zur Herstellung einer härtbaren homogenen Mischung enthaltend eine Polyepoxidkomponente und eine Härterkomponente, ein Verfahren zur Herstellung einer bei Raumtemperatur flüssigen und homogenen Härterkomponente, eine bei Raumtemperatur flüssige und homogene Härterkomponente sowie eine Verwendung einer bei Raumtemperatur flüssigen und homogenen Härterkomponente zum Härten einer Polyepoxidkomponente.

### STAND DER TECHNIK

Epoxidharze gehören zu den vielseitigsten polymeren Werkstoffen. So finden diese insbesondere Anwendungen als Beschichtungen, Klebstoffe, Giessharzmassen, Formmassen, sowie als Einbettmassen zur Umhüllung elektronischer Bauteile.

Die Umwandlung der Polyepoxidverbindungen in polymere und duroplastische Produkte erfordert Reaktionspartner, die man als Härter oder Härtungsmittel bezeichnet. Unter der Vielfalt der eingesetzten Härter zeichnen sich insbesondere cyclische Carbonsäureanhydride aus. So zeigen derart gehärtete Produkte ausgezeichnete elektrische Isoliereigenschaften und gute thermische Beständigkeit, und weisen, insbesondere im Vergleich zu mit Aminen gehärteten Epoxyharzen, hohe Glastemperaturen T_{G} auf.

Das Härten der Polyepoxidverbindungen mit cyclischen Carbonsäureanhydriden zur Erzielung der genannten vorteilhaften Eigenschaften erfolgt im allgemeinen bei erhöhten Temperaturen in einer sogenannten "Warm- oder Heisshärtung". So sind für die Warmhärtung, selbst bei Zugabe von sogenannten Härtungsbeschleunigern, Temperaturen von grösser als 80°C, in der Regel von grösser als 100°C, erforderlich, während die Heisshärtung im allgemeinen bei Temperaturen von grösser als 150°C erfolgt.

Zur Gewährleistung der genannten vorteilhaften Eigenschaften bei den ausgehärteten Produkten stellt das Erzeugen von homogenen Mischungen aller Reaktionspartner und Komponenten, d.h. insbesondere der Polyepoxidkomponente und der Härterkomponente, sowie von gegebenenfalls weiteren vorhandenen Komponenten wie Härtebeschleuniger, Flammschutz-, Streck- oder Elastifizierungsmittel oder dergleichen, ein in der Regel notwendiges Erfordernis dar. Dies gilt insbesondere bei der Herstellung hochwertiger und/oder grosser Bauteile wie elektrische Isolatoren, bei welchen die Gussgewichte des isolierenden Harzsystems über 100 kg liegen und/oder bei welchen Wanddicken von grösser als 15 cm auftreten.

Daher werden die in der Regel festen und als Pulver kommerziell erhältlichen cyclischen Carbonsäureanhydride im allgemeinen vor dem eigentlichen Härteprozess in einem ersten Schritt aufgeschmolzen und verflüssigt, um das Lösen in der Polyepoxidkomponente und damit das Erzielen einer homogenen Mischung zu erleichtern. Ein derartiges Aufschmelzen und Verflüssigen der cyclischen Carbonsäureanhydride bzw. deren Gemische stellt somit ein zusätzlicher sowohl zeit- als auch energieaufwendiger und damit kostenverursachender Arbeitsschritt da. Darüber hinaus kann das Einwirken höherer Temperaturen, das insbesondere über einen längeren Zeitraum erfolgt, die vorzeitige Alterung der Härterkomponente zur Folge haben, und damit zu einem Qualitätsverlust der vernetzten Produkte, insbesondere in Hinsicht auf die genannten vorteilhaften Eigenschaften, führen.

Das Aufschmelzen und Verflüssigen der cyclischen Carbonsäureanhydride kann entweder in Gegenwart der anderen Komponenten oder - was insbesondere bei der Herstellung hochwertiger und/oder grosser Bauteile zutrifft - in Abwesenheit der anderen Komponenten erfolgen. Das separate Aufschmelzen der Härterkomponente bzw. das Bereitstellen einer homogenen Härterkomponente, insbesondere bei der Herstellung hochwertiger und/oder grosser Bauteile, ist insofern von grossem Vorteil, da die für das Aufschmelzen der Härterkomponente erforderliche Zeit nicht die eigentliche Topfzeit, d.h. die Zeitspanne, in der ein Ansatz nach dem Mischen aller Bestandteile verarbeitbar bleibt, verringert. Desweiteren kann durch das Aufschmelzen bzw. Verflüssigen und Homogenisieren der Härterkomponente in Gegenwart der Polyepoxidkomponente und durch die damit mögliche einsetzende Vernetzung ein nicht erwünschtes und rasches Ansteigen der Verarbeitungsviskosität resultieren.

In der WO99/67315 werden Harzsysteme aus Aminodiglycidylverbindungen und cyclischen Carbonsäureanhydriden beschrieben, welche durch Kalthärtung, d.h. bei niederen Temperaturen und insbesondere bei Raumtemperatur, zu vernetzten Produkten mit sehr guten Hochtemperatur-Einsatzeigenschaften führen. In bevorzugten Ausführungsformen für diese Kalthärtung werden Gemische von cyclischen Carbonsäureanhydriden als Härterkomponente verwendet, welche insbesondere Maleinsäureanhydrid (MA) oder Hexahydrophthalsäureanhydrid (HHPA) bzw. Gemische dieser beiden cyclischen Carbonsäureanhydride enthalten. Allerdings wird auch in dieser Druckschrift die Härterkomponente im allgemeinen in Gegenwart der Polyepoxidkomponente bei erhöhten Temperaturen über einen in der Regel längeren Zeitraum behandelt, so dass auch bei dieser Kalthärtung ein zusätzlicher zeit- und energieaufwendiger und somit kostenverursachender Arbeitsschritt durchgeführt wird, und welcher von den genannten Nachteilen begleitet ist.

Es ist daher Aufgabe der vorliegenden Erfindung ein Verfahren zur Herstellung einer härtbaren homogenen Mischung enthaltend einer Polyepoxidkomponente und einer aus mindestens zwei Carbonsäureanhydriden bestehenden Härterkomponente anzugeben, welches Verfahren die Nachteile der bekannten Verfahren vermindert oder gar vermeidet, und welches Verfahren insbesondere zu verminderter Energieaufwendung und damit zu Kosteneinsparungen führt.

Darüber hinaus ist eine Aufgabe der vorliegenden Erfindung ein Verfahren zur Herstellung einer härtbaren homogenen Mischung enthaltend einer Polyepoxidkomponente und einer aus mindestens zwei Carbonsäureanhydriden bestehenden Härterkomponente zu schaffen, welches Verfahren es erlaubt, eine schnellere Verarbeitung zu ermöglichen, und somit zu Kosteneinsparungen führt.

Es ist eine weitere Aufgabe der vorliegenden Erfindung ein Verfahren zur Herstellung einer härtbaren homogenen Mischung enthaltend einer Polyepoxidkomponente und einer aus mindestens zwei Carbonsäureanhydriden bestehenden Härterkomponente anzugeben, welches Verfahren es erlaubt, eine maximale Topfzeit für die härtbare homogene Mischung zu erzielen und eine geringe Verarbeitungsviskosität zu Beginn des Härtungsprozesses zu ermöglichen.

Es ist eine weitere Aufgabe der vorliegenden Erfindung ein Verfahren zur Herstellung einer härtbaren homogenen Mischung enthaltend einer Polyepoxidkomponente und einer aus mindestens zwei Carbonsäureanhydriden bestehenden Härterkomponente zu schaffen, welches Verfahren die Gefahr der Alterung der Härterkomponente reduziert.

Eine weitere Aufgabe der vorliegenden Erfindung ist es, ein Verfahren zur Herstellung einer bei Raumtemperatur flüssigen und homogenen Härterkomponente zum Härten einer Polyepoxidkomponente bestehend aus mindestens zwei cyclischen Carbonsäureanhydride anzugeben, welches Verfahren die Nachteile des Standes der Technik vermindert oder gar vermeidet, und welches Verfahren insbesondere weniger energieaufwendig ist und in einfacher Weise, und ohne den Einsatz insbesondere grossvolumiger und aufwendiger Vorrichtungen wie Heizvorrichtungen oder dergleichen zu benötigen, durchführbar ist, und somit zur Senkung von Kosten beiträgt.

Desweiteren ist eine Aufgabe der vorliegenden Erfindung ein Verfahren zur Herstellung einer bei Raumtemperatur flüssigen und homogenen Härterkomponente zum Härten einer Polyepoxidkomponente bestehend aus mindestens zwei cyclischen Carbonsäureanhydride anzugeben, welches Verfahren eine Weiterverwendung der Härterkomponente in der Weise ermöglicht, dass die Verarbeitungszeit für den Härtungsprozess maximiert und die Verarbeitungsviskosität zu Beginn des Härtungsprozesses gering gehalten wird, und welches Verfahren die Gefahr der Alterung der cyclischen Carbonsäureanhydride vermindert.

Es ist darüber hinaus eine Aufgabe der vorliegenden Erfindung, eine bei Raumtemperatur flüssige und homogene Härterkomponente zum Härten einer Polyepoxidkomponente bestehend aus mindestens zwei cyclischen Carbonsäureanhydride anzugeben.

Weitere Aufgaben und weitere Vorteile der vorliegenden Erfindung werden im Verlauf der folgenden Beschreibung offensichtlich.

### DARSTELLUNG DER ERFINDUNG und WEGE ZUR AUSFÜHRUNG DERSELBEN

Diese und weitere Aufgaben werden erfindungsgemäss durch ein Verfahren zur Herstellung einer härtbaren homogenen Mischung mit den Merkmalen des Anspruchs 1, durch ein Verfahren zur Herstellung einer bei Raumtemperatur flüssigen und homogenen Härterkomponente mit den Merkmalen des Anspruchs 3, durch eine bei Raumtemperatur flüssige und homogene Härterkomponente mit den Merkmalen der Ansprüche 8 und 9, und durch eine Verwendung gemäss Anspruch 10 gelöst.

Weitere bevorzugte Ausführungsformen ergeben sich aus den Merkmalen der Unteransprüche und der Beschreibung.

So ist ein erster Aspekt der vorliegenden Erfindung ein Verfahren zur Herstellung einer härtbaren homogenen Mischung, welche Mischung eine Polyepoxidkomponente und eine Härterkomponente enthält, und welche Härterkomponente aus einem Gemisch von mindestens zwei cyclischen Carbonsäureanhydriden besteht, wobei mindestens eines der cyclischen Carbonsäureanhydride unter Normalbedingungen ein Feststoff ist und das Mischungsverhältnis der mindestens zwei cyclischen Carbonsäureanhydride derart gewählt ist, dass der Schmelzpunkt des Gemisches unterhalb Raumtemperatur liegt, in welchem Verfahren die mindestens zwei cyclischen Carbonsäureanhydride zur Bereitstellung einer bei Raumtemperatur flüssigen und homogenen Härterkomponente bei Raumtemperatur vermengt werden und das Vermengte bei Raumtemperatur belassen wird, und in welchem Verfahren die bei Raumtemperatur flüssige und homogene Härterkomponente in der Polyepoxidkomponente gelöst wird.

Ein zweiter Aspekt der vorliegenden Erfindung betrifft ein Verfahren zur Herstellung einer bei Raumtemperatur flüssigen und homogenen Härterkomponente, welche Härterkomponente aus einem Gemisch von mindestens zwei cyclischen Carbonsäureanhydriden besteht, wobei mindestens eines der cyclischen Carbonsäureanhydride unter Normalbedingungen ein Feststoff ist und das Mischungsverhältnis der mindestens zwei cyclischen Carbonsäureanhydride derart gewählt ist, dass der Schmelzpunkt des Gemisches unterhalb Raumtemperatur liegt, in welchem Verfahren die mindestens zwei cyclischen Carbonsäureanhydride bei Raumtemperatur vermengt werden und das Vermengte bei Raumtemperatur belassen wird.

Hinsichtlich der in dieser Schrift verwendeten Fachbegriffe wird, falls nicht gesondert erläutert, auf das "Römpp Lexikon Chemie", Herausgeber: J. Falbe und M. Regitz, 10. Auflage (1996-1999), Georg Thieme Verlag, Stuttgart, verwiesen.

Unter dem Begriff "härtbar" oder "vernetzbar" wird hierin die Fähigkeit eines polymerisierbaren Systems verstanden, einen nicht reversiblen Zustand einzunehmen. Der Begriff "homogen", wie hierin verwendet, soll sich auf ein System beziehen, und insbesondere auf die Mischung oder auf die flüssige Härterkomponente als Gemisch von mindestens zwei cyclischen Carbonsäureanhydriden im Sinne der vorliegenden Anmeldung, in welchem System alle Bestandteile den gleichen physikalischen Aggregatszustand, und hier insbesondere den flüssigen Zustand, aufweisen. Die Ausdrücke "Mischung" bzw. "Gemisch" werden hierin für Zusammensetzungen aus zwei oder mehr chemisch verschiedenen Substanzen verwendet. Insbesondere werden "homogene Mischung" und/oder "homogenes Gemisch" als Zusammensetzungen gemäss obiger Definitionen verstanden, welche, vorzugsweise, aus einer Phase bestehen.

Eine "Polyepoxidkomponente" gemäss der vorliegenden Erfindung enthält mindestens eine Polyepoxidverbindung, wie sie dem Fachmann auf dem Gebiet hinlänglich bekannt sind und wie sie bspw. in der oben erwähnten WO99/67315 beschrieben sind. So enthält die Polyepoxidkomponente gemäss der vorliegenden Erfindung vorzugsweise mindestens eine aromatische Aminodiglycidylverbindung und besonders bevorzugt mindestens eine trifunktionelle, d.h. drei Glycidylgruppen pro Molekül aufweisende, aromatische Aminoglycidylverbindung, und meist bevorzugt mindestens eine tetrafunktionelle Aminoglycidylverbindung. Es versteht sich, dass diese aromatischen Aminoglycidylverbindungen verschiedenartig substituiert sein können, wobei insbesondere eine oder mehrere Substitutionen an dem oder den aromatischen Systemen auftreten können. Geeignete Systeme sind dem Fachmann auf dem Gebiet bekannt und bedürfen hier keiner weiteren Erläuterung.

Die "Härterkomponente" enthält erfindungsgemäss mindestens zwei cyclische Carbonsäureanhydride, wobei mindestens eines dieser cyclischen Carbonsäureanhydride unter Normalbedingungen ein Feststoff ist und die Auswahl der mindestens zwei cyclischen Carbonsäureanhydride und deren Mischungsverhältnis derart erfolgt, dass der Schmelzpunkt des Gemisches aus den mindestens zwei cyclischen Carbonsäureanhydriden unterhalb Raumtemperatur liegt. Im Sinne der vorliegenden Erfindung beziehen sich hierbei "Normalbedingungen" auf Raumtemperatur und Normaldruck, wobei "Raumtemperatur", wie in der vorliegenden Erfindung verwendet, 25°C betragen soll, und "Normaldruck" als 1013 mbar definiert sein soll. Der Fachmann weiss eine derartige Auswahl vorzunehmen, wobei gegebenenfalls Vorversuche angestellt werden können. Besonders bevorzugte und in dieser Weise ausgewählte Gemische werden nachfolgend beschrieben. Insbesondere sind vorzugsweise zwei, besonders vorzugsweise alle, cyclischen Carbonsäureanhydride bei Normalbedingungen Feststoffe.

So besteht die Härterkomponente in einer besonders bevorzugten Ausführungsform aus einem Gemisch von zwei cyclischen Carbonsäureanhydride, und insbesondere aus einem Gemisch von Maleinsäureanhydrid (MA) und Hexahydrophthalsäureanhydrid (HHPA), und hierbei vorzugsweise in einem Mischungsverhältnis von 60 Gew.-% MA und 40 Gew.-% HHPA.

Zur Herstellung bzw. Bereitstellung einer bei Raumtemperatur flüssigen und homogenen Härterkomponente werden die mindestens zwei cyclischen Carbonsäureanhydride bei Raumtemperatur vermengt. Das Vermengte wird sodann bei Raumtemperatur belassen. Unter "vermengt" im Sinne der vorliegenden Erfindung soll ein Zusammengeben der einzelnen cyclischen Carbonsäureanhydride in einem geeigneten Gefäss, und vorzugsweise unter Luftabschluss oder unter trockener Luft, oder insbesondere unter Schutz- oder Inertgas, verstanden werden, wobei sich in der Regel ein kurzes und/oder einmaliges Mischen zur Erreichung einer möglichst gleichmässigen Verteilung der einzelnen cyclischen Carbonsäureanhydride im Gemisch anschliesst. Unter "kurzem Mischen" wie hierin verwendet, soll vorzugsweise eine Zeitspanne verstanden werden, die nicht länger als eine Minute, besonders bevorzugt nicht länger als 30 Sekunden, und ganz besonders bevorzugt nicht länger als 15 Sekunden dauert. Bevorzugt erfolgt ein derartiges einmaliges Mischen mit einem Spatel oder dergleichen. Es versteht sich allerdings, dass auch andere Vorrichtungen zum einmaligen Mischen verwendet werden können.

Das in dieser Weise vermengte Gemisch wird bei Raumtemperatur belassen bis dieses flüssig und homogen ist. Dabei kann das Gemisch bei Raumtemperatur unter weiterem Rühren oder weiterem Mischen belassen werden. Der Fachmann kennt verschiedenste Arten, um ein bei Raumtemperatur belassenes Gemisch zu rühren oder zu mischen. Ebenso sind dem Fachmann die verschiedenartigsten Vorrichtungen für ein derartiges Rühren oder Mischen vertraut, so dass dies keiner weiteren Erläuterung bedarf.

In einer bevorzugten Ausführungsform der erfindungsgemässen Verfahren werden die mindestens zwei cyclischen Carbonsäureanhydride bei Raumtemperatur über eine Dauer zwischen 0.5 h und 24 h und vorzugsweise zwischen 1 h und 18 h, und besonders bevorzugt zwischen 2 h und 4 h belassen. Geeigneterweise kann das erfindungsgemässe Belassen des Gemisches bei Raumtemperatur über Nacht erfolgen.

In einer weiteren bevorzugten Ausführungsform der erfindungsgemässen Verfahren werden die mindestens zwei cyclischen Carbonsäureanhydride bei Raumtemperatur ruhend, d.h. ohne zu rühren oder zu mischen belassen. Dies führt zu einer weiteren Vereinfachung der erfindungsgemässen Verfahren, was insbesondere weitere Kosteneinsparungen ermöglicht. Die bei Raumtemperatur flüssige und homogene Härterkomponente wird erfindungsgemäss zur Herstellung einer härtbaren und homogenen Mischung in der Polyepoxidkomponente gelöst.

Die Vorteile der Erfindung sind für den Fachmann auf dem Gebiet offensichtlich. So führt die Einfachheit der erfindungsgemässen Verfahren zu erheblichen Kosteneinsparungen, insbesondere aufgrund geringerem Energie- und Zeitaufwand, als auch bedingt durch einen verringerten Bedarf an speziellen Vorrichtungen, wie Heizvorrichtungen. Darüber hinaus ermöglicht die vorliegende Erfindung eine maximale Topfzeit und eine geringe Anfangsviskosität für die letztlich verwendete Mischung, und verringert die Gefahr der unerwünschten Alterung der Härterkomponente.

Desweiteren erweist sich die vorliegende Erfindung insbesondere als vorteilhaft bei der Herstellung grosser Bauteilen bzw. der damit verbundenen Handhabung grosser Quantitäten. So besteht eine bevorzugte Verwendung der erfindungsgemässen flüssigen und homogenen Härterkomponente bzw. der härtbaren homogenen Mischung in der Herstellung grosser Gussteile, und hier insbesondere zur Herstellung grosser elektrischer Isolatoren, bei welchen die Gussgewichte des isolierenden Harzsystems über 100 kg liegen und/oder bei welchen Wanddicken von grösser als 15 cm auftreten.

Obwohl hier bevorzugte Ausführungsformen der Erfindung beschrieben wurden, ist es für Fachleute auf dem Gebiet naheliegend, dass Veränderungen und Modifikationen der beschriebenen Ausführungsformen durchgeführt werden können, ohne sich vom Wesen und Zweck der Erfindung zu entfernen.

## Patentansprüche

1. Verfahren zur Herstellung einer härtbaren homogenen Mischung, welche Mischung eine Polyepoxidkomponente und eine Härterkomponente enthält, und welche Härterkomponente aus einem Gemisch von mindestens zwei cyclischen Carbonsäureanhydriden besteht, wobei mindestens eines der cyclischen Carbonsäureanhydride unter Normalbedingungen ein Feststoff ist und das Mischungsverhältnis der mindestens zwei cyclischen Carbonsäureanhydride derart gewählt ist, dass der Schmelzpunkt des Gemisches unterhalb Raumtemperatur liegt, in welchem Verfahren die mindestens zwei cyclischen Carbonsäureanhydride zur Bereitstellung einer bei Raumtemperatur flüssigen und homogenen Härterkomponente bei Raumtemperatur vermengt werden und das Vermengte bei Raumtemperatur belassen wird, und in welchem Verfahren die bei Raumtemperatur flüssige und homogene Härterkomponente in der Polyepoxidkomponente gelöst wird.

2. Verfahren nach Anspruch 1, **dadurch gekennzeichnet, dass** die mindestens zwei cyclischen Carbonsäureanhydride bei Raumtemperatur ruhend belassen werden.

3. Verfahren zur Herstellung einer bei Raumtemperatur flüssigen und homogenen Härterkomponente, welche Härterkomponente aus einem Gemisch von mindestens zwei cyclischen Carbonsäureanhydriden besteht, wobei mindestens eines der cyclischen Carbonsäureanhydride unter Normalbedingungen ein Feststoff ist und das Mischungsverhältnis der mindestens zwei cyclischen Carbonsäureanhydride derart gewählt ist, dass der Schmelzpunkt des Gemisches unterhalb Raumtemperatur liegt, in welchem Verfahren die mindestens zwei cyclischen Carbonsäureanhydride bei Raumtemperatur vermengt werden und das Vermengte bei Raumtemperatur belassen wird.

4. Verfahren nach Anspruch 3, **dadurch gekennzeichnet, dass** die mindestens zwei cyclischen Carbonsäureanhydride bei Raumtemperatur über eine Dauer zwischen 0.5 h und 24 h und vorzugsweise zwischen 1 h und 18 h, und besonders bevorzugt zwischen 2 h und 4 h belassen werden.

5. Verfahren nach Anspruch 3 oder 4, **dadurch gekennzeichnet, dass** die mindestens zwei cyclischen Carbonsäureanhydride bei Raumtemperatur ruhend belassen werden.

6. Verfahren nach einem der Ansprüche 3 bis 5, **dadurch gekennzeichnet, dass** die Härterkomponente aus einem Gemisch von Maleinsäureanhydrid (MA) und Hexahydrophthalsäureanhydrid (HHPA) besteht.

7. Verfahren nach Anspruch 6, **dadurch gekennzeichnet, dass** die Härterkomponente aus einem Gemisch von Maleinsäureanhydrid (MA) und Hexahydrophthalsäureanhydrid (HHPA) in einem Mischungsverhältnis von 60 Gew.-% MA und 40 Gew.-% HHPA besteht.

8. Bei Raumtemperatur flüssige und homogene Härterkomponente erhältlich durch das Verfahren gemäss Anspruch 3.

9. Härterkomponente bestehend aus einem Gemisch von Maleinsäureanhydrid (MA) und Hexahydrophthalsäureanhydrid (HHPA), vorzugsweise in einem Mischungsverhältnis von 60 Gew.-% MA und 40 Gew.-% HHPA, und welches Gemisch bei Raumtemperatur flüssig und homogen ist.

10. Verwendung einer bei Raumtemperatur flüssigen und homogenen Härterkomponente bestehend aus einem Gemisch von Maleinsäureanhydrid (MA) und Hexahydrophthalsäureanhydrid (HHPA), vorzugsweise in einem Mischungsverhältnis von 60 Gew.-% MA und 40 Gew.-% HHPA, zum Härten einer Polyepoxidkomponente, vorzugsweise zum Kalthärten einer Polyepoxidkomponente.
